# EUROPÄISCHE PATENTANMELDUNG

(11) **EP 1 241 034 A1**
(43) Veröffentlichungstag der Anmeldung: **18.09.2002**
(21) Anmeldenummer: 02002869.2
(22) Anmeldetag: 08.02.2002
(51) Int. Cl.: B60J 7/02, B60J 7/14

(54) **Zwischen einer Schliessposition und einer Öffnungsposition verstellbares Cabriolet-Fahrzeugdach**

(30) Priorität: 12.03.2001 DE 10112092
(71) Anmelder: CTS Fahrzeug-Dachsysteme GmbH, 21079 Hamburg (DE)
(72) Erfinder: Hasselgruber, Andreas, Dipl.Ing., 71735 Eberdingen-Nussdorf (DE); Brauns, Andreas, Dipl.-Ing., 22457 Hamburg (DE)
(74) Vertreter: Müller, Gottfried

(57) **Zusammenfassung**

Ein zwischen einer Schließposition und einer Öffnungsposition verstellbares Cabriolet-Fahrzeugdach umfasst mindestens zwei in Schließposition in Fahrzeuglängsrichtung hintereinander angeordnete Dachteile (2,3), die über eine Gelenkkinematik (4) aneinander gekoppelt sind, wobei zum Öffnen des Fahrzeugdaches (1) das vordere Dachteil (2) um eine im Übergangsbereich zwischen vorderem und hinterem Dachteil (2,3) gelegene Schwenkachse in eine Position unter das hintere Dachteil (3) verschwenkbar ist.

Bei der Überführung von Schließ- in Öffnungsposition sind das vordere Dachteil (2) und das hintere Dachteil (3) relativ zueinander translatorisch verschiebbar. In der verschobenen Position ist das vordere Dachteil (2) um die Schwenkachse unter das hintere Dachteil (3) verschwenkbar.

## Beschreibung

Die Erfindung bezieht sich auf ein zwischen einer Schließposition und einer Öffnungsposition verstellbares Cabriolet-Fahrzeugdach nach dem Oberbegriff des Anspruches 1.

Aus der Druckschrift DE 196 42 154 A1 ist ein dreiteiliges Hardtop-Fahrzeugdach mit drei in einer kinematischen Kette aneinander gekoppelten Dachteilen bekannt, die in Schließstellung des Fahrzeugdaches in Fahrzeuglängsrichtung unmittelbar hintereinander liegen und in Öffnungsstellung in einem Ablageraum hinter der Fahrgastzelle verstaut werden. Das hintere Dachteil ist über eine Stellkinematik mit der Fahrzeugkarosserie, das mittlere Dachteil über eine Viergelenkkinematik mit dem hinteren Dachteil und das vordere Dachteil über ein Drehgelenk mit dem mittleren Dachteil verbunden. Zur Überführung des Fahrzeugdaches von der Schließposition in die Öffnungsposition, in der die Dachteile im heckseitigen Ablageraum verstaut sind, wird das mittlere Dachteil in eine parallele Position unterhalb des hinteren Dachteiles verstellt und das vordere Dachteil um das Drehgelenk unter das mittlere Dachteil geklappt. Das gesamte Dachteilpaket, bestehend aus allen drei übereinander angeordneten Dachteilen, wird anschließend nach hinten in den Ablageraum hineingeklappt.

Hierbei kann das Problem auftreten, dass in Schließstellung die benachbarten Stirnseiten des vorderen und des mittleren Dachteils für einen dichten Abschluss unmittelbar aneinander grenzen müssen, zur Durchführung der Relativschwenkbewegung beider Dachteile während der Öffnungsbewegung aber Kollisionen im Bereich der unmittelbar aneinander grenzenden Stirnseiten vermieden werden müssen, um einen störungsfreien Bewegungsablauf des Fahrzeugdaches über eine lange Betriebsdauer gewährleisten zu können. Die Gelenkkinematik und die benachbarten Kanten von vorderem und mittlerem Dachteil unterliegen daher konstruktiven Einschränkungen, welche die Anzahl variabler Gestaltungsmöglichkeiten reduzieren.

Der Erfindung liegt das Problem zugrunde, ein aus mindestens zwei Dachteilen bestehendes Fahrzeugdach zu schaffen, das über eine lange Lebensdauer verfügt und variabel gestaltbar ist.

Dieses Problem wird erfindungsgemäß mit den Merkmalen des Anspruches 1 gelöst. Die Unteransprüche enthalten zweckmäßige Weiterbildungen.

Erfindungsgemäß ist vorgesehen, dass das vordere Dachteil und das hintere Dachteil bei der Überführung von Schließ- in Öffnungsposition relativ zueinander translatorisch verschiebbar und in der verschobenen Position um eine Schwenkachse relativ zueinander zu verschwenken sind. Um diese unterschiedlichen und voneinander entkoppelten Relativbewegungen ausführen zu können, umfasst die Gelenkkinematik zwischen vorderem und hinterem Dachteil zweckmäßig eine Schiebeführung, über die die translatorische Verschiebung durchgeführt wird, sowie eine an der Schiebeführung gehaltene Gelenkanordnung, über die die Schwenkbewegung zwischen vorderem und hinterem Dachteil realisiert wird. Die zeitlich aufeinander folgende Bewegung von Translation und Rotation kann durch eine entsprechende Ansteuerung der Gelenkkinematik über ein bzw. mehrere Stellglieder erfolgen.

Das Aufeinanderfolgen von Translation und Rotation wird vorteilhaft über ein einziges Stellglied umgesetzt, welches zweckmäßig ein Drehteil verschwenkt, an welchem eine Hebel- und Lenkeranordnung angreift, die die Drehbewegung des Drehteils in eine Translations- und Rotationsbewegung des vorderen Dachteiles relativ zum hinteren Dachteil umsetzt. Das Drehteil ist bevorzugt als zweiarmige Wippe ausgeführt, an der zwei Übertragungshebel gelenkig angreifen, von denen ein erster Übertragungshebel einen ausschließlich translatorisch verschiebbaren Schieber beaufschlagt und der zweite Übertragungslenker an einem sich zwischen vorderem und hinterem Dachteil erstreckenden Stabilisierungslenker angreift. Der ausschließlich translatorisch bewegbare Schieber greift ebenfalls an diesem Stabilisierungslenker an und ist in der Lage, diesen ohne Rotation translatorisch zu verschieben. Der zweite Übertragungslenker kann bei einer weiteren Drehbeaufschlagung der Wippe diesen Stabilisierungslenker um eine Drehachse in der Weise verschwenken, dass das vordere Dachteil in eine Position unterhalb des hinteren Dachteils einklappt.

Die Drehbewegungen der beiden gelenkig mit der Wippe gekoppelten Übertragungslenker sind in der Weise aufeinander abgestimmt, dass zu Beginn der Öffnungsbewegung - wenn das vordere Dachteil eine ausschließlich translatorische Relativbewegung gegenüber dem hinteren Dachteil ausführt - auf Grund der Schwenkbewegung der Wippe beide eine etwa gleich große, in die Verschieberichtung projizierte translatorische Bewegung ausführen, wodurch die ausschließlich translatorische Verschiebung des vorderen Dachteiles erreicht wird. Im weiteren Verlauf der Rotation der Wippe kommt dagegen die Schwenkbewegung des zweiten Übertragungshebels stärker zum Tragen als diejenige des ersten Übertragungshebels, was insbesondere dadurch erreicht wird, dass der Gelenkpunkt des zweiten Übertragungshebels an der Wippe einen größeren Abstand zur Gelenkachse der Wippe am hinteren Dachteil aufweist als der Gelenkpunkt des ersten Übertragungshebels an der Wippe, so dass dem vorderen Dachteil eine Drehbewegung aufgeprägt wird. Auf Grund des kleineren Radius des Gelenkpunktes des ersten Übertragungshebels an der Wippe gegenüber dem weiter außen angreifenden Gelenkpunkt des zweiten Übertragungshebels ist letzterer in der Lage, auf den Stabilisierungslenker eine größere Stellbewegung zu übertragen als der mittelbar über den Schieber am Stabilisierungslenker angreifende erste Übertragungslenker.

Weitere Vorteile und zweckmäßige Ausführungen sind den weiteren Ansprüchen, der Figurenbeschreibung und den Zeichnungen zu entnehmen. Es zeigen:
- Fig. 1: ein Cabriolet-Fahrzeugdach mit einem vorderen und einem hinteren Dachteil, die kinematisch aneinander gekoppelt sind und zwischen der in Fig. 1 gezeigten Schließstellung und einer Offenstellung zu überführen sind,
- Fig. 2: das Fahrzeugdach zu Beginn der Öffnungsbewegung in einer Zwischenposition zwischen Schließ- und Offenstellung, in welcher das vordere und das hintere Dachteil relativ zueinander translatorisch auseinander geschoben sind,
- Fig. 3: das Fahrzeugdach in einer weiteren Zwischenposition, in welcher das vordere Dachteil im Anschluß an die translatorische Verschiebung um eine Schwenkachse in eine Position unterhalb des hinteren Fahrzeugdaches eingeklappt ist.

In den folgenden Figuren sind gleiche Bauteile mit gleichen Bezugszeichen versehen.

Das Cabriolet-Fahrzeugdach 1 ist als Hardtop ausgebildet und umfasst ein vorderes Dachteil 2, welches in Schließstellung des Fahrzeugdaches der Windschutzscheibe des Fahrzeuges benachbart ist, sowie ein hinteres Dachteil 3, welches sich in Schließstellung unmittelbar an das vordere Dachteil 2 anschließt und hinter dem vorderen Dachteil 2 liegt. Das vordere Dachteil 2 ist über eine Gelenkkinematik 4 an das hintere Dachteil 3 angekoppelt und ist durch Beaufschlagung über die Gelenkkinematik 4 relativ zum hinteren Dachteil 3 translatorisch verschiebbar und rotatorisch verschwenkbar, wobei diese beiden Bewegungen unabhängig voneinander und zeitlich aufeinanderfolgend ausgeführt werden. Das hintere Dachteil 3 ist über ein Gelenk 5 entweder mit der Fahrzeugkarosserie oder aber mit einer weiteren Kinematik verbunden, über die das hintere Dachteil 3 relativ zur Fahrzeugkarosserie verschoben und/oder verschwenkt werden kann, um in Offenstellung des Fahrzeugdaches in eine Ablageposition hinter dem Fahrzeuginnenraum überführt werden zu können.

Die Gelenkkinematik 4 zwischen vorderem und hinterem Dachteil 2 bzw. 3 ist ausschließlich an diesen beiden Dachteilen gehalten. Die Gelenkkinematik 4 wird von einem Aktuator 6 beaufschlagt, der im Ausführungsbeispiel als hydraulischer Stellzylinder ausgeführt ist und am hinteren Dachteil 3 zweckmäßig benachbart zum Gelenk 5 gehalten ist. Die Gelenkkinematik 4 umfasst eine Mehrzahl von Bauteilen 7 bis 12, von denen das Bauteil 7 als zweiarmige Wippe, die Bauteile 8 und 9 als Übertragungslenker, das Bauteil 10 als Schieber und die Bauteile 11 und 12 als Verbindungs- bzw. Stabilisierungslenker zwischen vorderem und hinterem Dachteil 2 bzw. 3 ausgebildet sind. Die Wippe 7 ist über ein Gelenk 13, welches zwischen den beiden Armen der Wippe liegt, drehbar mit dem hinteren Dachteil 3 verbunden. An einem Arm der Wippe greift der Aktuator 6 an, am zweiten Arm der Wippe befindet sich ein Gelenk 14, über das der Übertragungslenker 9 schwenkbar mit der Wippe 7 verbunden ist. An einem weiteren Gelenk 15, welches etwa in der Mitte zwischen beiden Armen der Wippe 7, jedoch mit Abstand zum Gelenk 13 der Wippe angeordnet ist, greift schwenkbar der Übertragungslenker 8 zwischen Wippe 7 und Schieber 10 an.

Die Gelenke 14 und 15 der Übertragungslenker 8 und 9 befinden sich in einem unterschiedlichen Abstand zur Schwenkachse der Wippe 7, welche durch das Gelenk 13 definiert wird, über die die Wippe 7 am hinteren Dachteil 3 gehalten ist. Der Abstand des Gelenks 14 zur Schwenkachse ist insbesondere mindestens doppelt so groß wie derjenige des Gelenks 15 zur Schwenkachse.

Der erste Übertragungshebel 8 überträgt die Schwenkbewegung der Wippe 7 auf den Schieber 10, mit dem der Übertragungshebel 8 über ein Gelenk 16 drehbar verbunden ist. Auf Grund der gelenkigen Lagerung des Übertragungshebels 8 an der Wippe sowie der translatorischen Führung des Schiebers 10 wird die rotatorische Wippenbewegung in eine translatorische Verschiebebewegung des Schiebers 10 umgesetzt. Die translatorische Führung des Schiebers 10 am hinteren Dachteil 3 wird mittels zwei im Schieber 10 vorgesehenen Kulissen 17 und 18 erzielt, welche in einer Flucht hintereinander liegend in den Schieber 10 eingebracht sind und in die jeweils ein fest mit dem hinteren Dachteil verbundener Stift einragt, so dass der Schieber 10 zwischen zwei Endstellungen verschoben werden kann, in denen der jeweils in eine der Kulissen 17, 18 einragende Stift an einer der beiden Stirnseiten der Kulisse 17 bzw. 18 anliegt.

Auf der dem vorderen Dachteil 2 zugewandten Seite ist der Schieber 10 über ein Gelenk 19 mit dem Verbindungslenker 11 gekoppelt, welcher über ein Gelenk 20 schwenkbar am vorderen Dachteil 2 gehalten ist. Über ein weiteres Gelenk 21, welches parallel zum Gelenk 19 angeordnet ist und wie dieses benachbart zur Stirnseite des hinteren Dachteiles 3 liegt, ist der Schieber 10 mit dem Stabilisierungslenker 12 gelenkig gekoppelt, dessen dem Schieber 10 abgewandte Seite über ein Gelenk 22 unmittelbar an das vordere Dachteil 2 angebunden ist.

Der Verbindungslenker 11 weist schließlich noch ein Gelenk 23 auf, über das der Übertragungslenker 9 die Bewegung der Wippe 7 unmittelbar auf den Verbindungslenker 11 überträgt. Das Gelenk 23 weist etwa den halben Abstand zu der durch das Gelenk 20 des Verbindungslenkers 11 definierten Drehachse auf wie das Gelenk 19, über das der Stabilisierungslenker mit dem Schieber 10 verbunden ist.

Wird der Aktuator 6 in Pfeilrichtung 24 translatorisch ausgefahren, verschwenkt die Wippe 7 in Pfeilrichtung 25 um ihre Drehachse durch das Gelenk 13, wobei diese Schwenkbewegung über den Übertragungslenker 8 in eine translatorische Verschiebebewegung in Pfeilrichtung 26 des Schiebers 10 umgesetzt wird. Die Verschieberichtung 26 liegt etwa in der Ebene des geschlossenen Fahrzeugdaches. Die translatorische Verschiebung des Schiebers 10 wird über den Stabilisierungslenker 11 und den Stabilisierungslenker 12 in eine entsprechende Verschiebung des vorderen Dachteiles 2 in Pfeilrichtung 27 in Richtung der Windschutzscheibe des Fahrzeuges umgesetzt.

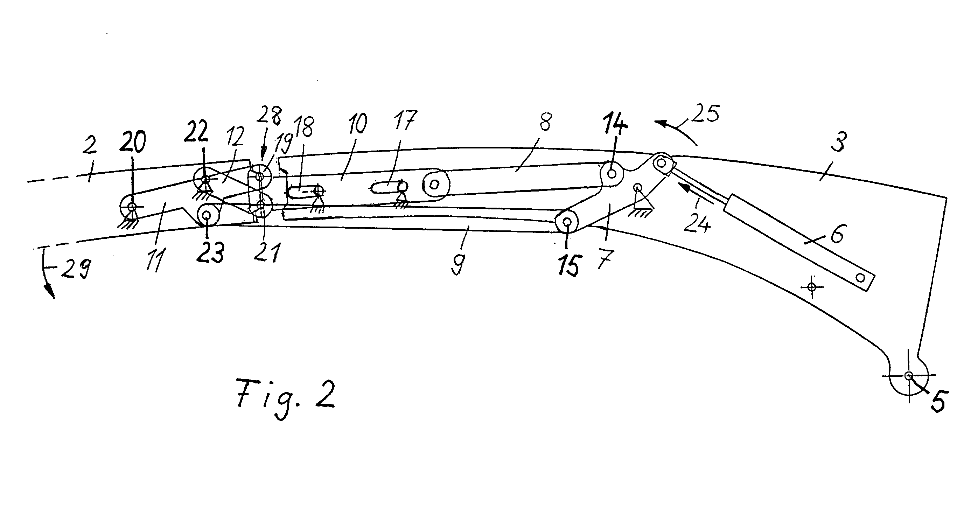

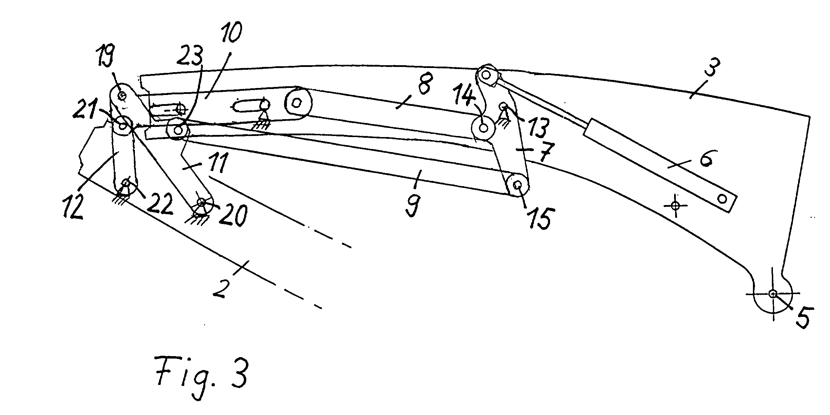

Die translatorische Verschiebung wird zu Beginn der Öffnungsbewegung des Fahrzeugdaches durchgeführt, wodurch die in Fig. 2 dargestellte Zwischenposition des Fahrzeugdaches erreicht wird, in der zwischen vorderem Dachteil 2 und hinterem Dachteil 3 eine Lücke 28 gebildet ist, deren Breite durch die maximale, durch die Länge der Kulissen 17 und 18 begrenzte Verschiebung bestimmt wird. Die Lücke 28 zwischen vorderem und hinterem Dachteil 2 bzw. 3 bietet den Vorteil, dass zum Öffnen des Fahrzeugdaches und Ablegen in einem hinter der Fahrgastzelle gelegenen Ablageraum das vordere Dachteil 2 ohne Behinderungen benachbarter Bauteile von vorderem und hinterem Dachteil 2 bzw. 3 in eine Position unterhalb des hinteren Dachteiles 3 (siehe Fig. 3) verschwenkt werden kann. Auf Grund des durch die Lücke 28 definierten Abstandes zwischen den einander zugewandten Stirnseiten von vorderem Dachteil 2 und hinterem Dachteil 3 treten auch bei einer starken Schwenkbewegung des vorderen Dachteiles 2 um näherungsweise 180° in eine unter dem hinteren Dachteil 3 gelegene Position keine Kollisionen im einander zugewandten stirnseitigen Bereich zwischen vorderem und hinterem Dachteil 2 bzw. 3 auf. Das vordere Dachteil 2 kann ohne Bewegungseinschränkung in seine Ablageposition überführt werden.

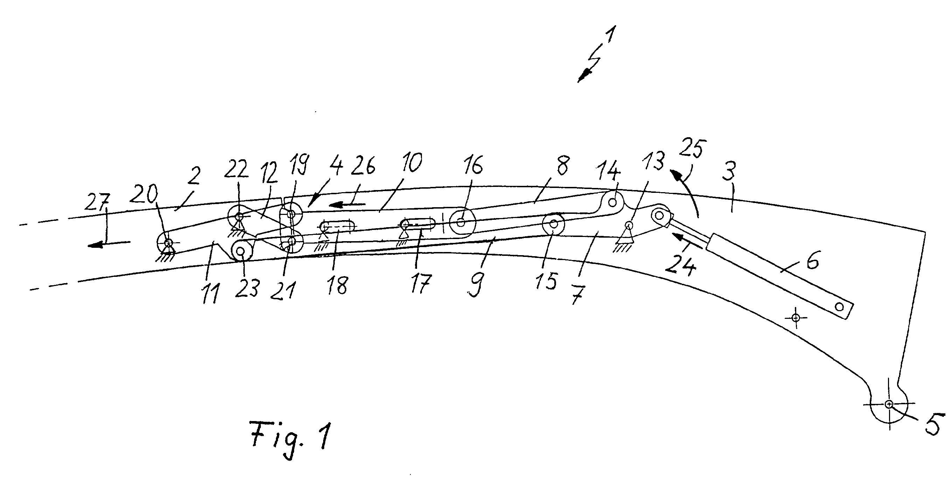

Bei der translatorischen Verschiebung des vorderen Dachteiles 2 relativ zum hinteren Dachteil 3 - Übergang von Fig. 1 auf Fig. 2 - wird das Maß der translatorischen Verschiebung im Wesentlichen bestimmt durch die in Verschieberichtung projizierte Bewegung des Übertragungshebels 8. Bei einer Drehbewegung in Pfeilrichtung 25 der Wippe 7 vollführt der Übertragungshebel 8 in seinem Gelenk 14 zur Wippe 7 eine Teilkreisbewegung, die, projiziert in translatorische Richtung, das Maß der Verschiebung bestimmt. Zugleich wird auch der zweite Übertragungshebel 9, welcher über das Gelenk 15 ebenfalls mit der Wippe 7 verbunden ist, durch die Wippen-Schwenkbewegung beeinflusst, wobei auch hierbei eine translatorische Verschiebung in Pfeilrichtung 27 im Gelenk 23 des Übertragungshebels 9 am Stabilisierungslenker 11 erzeugt wird. Die in translatorische Verschieberichtung projizierten Bewegungen in den Gelenken 14 und 15 sind in der Weise aufeinander abgestimmt, dass jeweils ein gleiches Verschiebemaß generiert wird, so dass in den Gelenken 19 und 23 am Stabilisierungslenker 11 jeweils eine gleiche Verschiebung in Pfeilrichtung 27 erzeugt wird und das vordere Dachteil 2 parallel ohne Schwenkbewegung verschoben wird.

Nachdem das vordere Dachteil 2 seine in Fig. 2 dargestellte Zwischenposition mit der Lücke 28 zwischen vorderem und hinterem Dachteil 2 bzw. 3 erreicht hat, wird durch weitere Elongation des Aktuators 6 in Pfeilrichtung 24 eine weitere Schwenkbewegung der Wippe 7 in Pfeilrichtung 25 erzeugt, wodurch eine Verschwenkung des vorderen Dachteiles 2 um die Gelenke 19 und 21 in Pfeilrichtung 29 ausgelöst und schließlich die in Fig. 3 dargestellte Position mit dem unterhalb des hinteren Dachteiles 3 gelegenen vorderen Dachteiles 2 erreicht wird, in der die Dachteilinnenseiten von vorderem und hinterem Dachteil 2 bzw. 3 in benachbarter, einander zugewandter Position liegen. Die Schwenkbewegung um die Achsen 19 und 21 wird im Wesentlichen durch eine Bewegung des Übertragungslenkers 9 hervorgerufen, der durch die Rotation der Wippe 7 in Pfeilrichtung 25 in seinem Gelenk 15 an der Wippe 7 im Gegenuhrzeigersinn verschwenkt und in Richtung des Gelenks 5 bewegt wird, wodurch auf den Verbindungslenker 11 im Gelenk 23 eine Zugkraft ausgeübt wird, die das vordere Dachteil 2 in seine in Fig. 3 dargestellte Position verschwenkt.

Der Schieber 10 verharrt während der Schwenkbewegung des vorderen Dachteiles 2 in seiner ausgefahrenen, über die Stirnseite des hinteren Dachteiles 3 überstehenden Position.

## Patentansprüche

1. Zwischen einer Schließposition und einer Öffnungsposition verstellbares Cabriolet-Fahrzeugdach, mit mindestens zwei in Schließposition in Fahrzeuglängsrichtung hintereinander angeordneten Dachteilen (2 und 3), die über eine Gelenkkinematik (4) aneinander gekoppelt sind, wobei zum Öffnen des Fahrzeugdaches (1) das vordere Dachteil (2) um eine im Übergangsbereich zwischen vorderem und hinterem Dachteil (2 und 3) gelegene Schwenkachse in eine Position unter das hintere Dachteil (3) verschwenkbar ist,
**dadurch gekennzeichnet, dass** bei der Überführung von Schließ- in Öffnungsposition das vordere Dachteil (2) und das hintere Dachteil (3) relativ zueinander translatorisch verschiebbar sind und in der verschobenen Position das vordere Dachteil (2) um die Schwenkachse unter das hintere Dachteil (3) verschwenkbar ist.

2. Cabriolet-Fahrzeugdach nach Anspruch 1,
**dadurch gekennzeichnet, dass** das vordere Dachteil (2) relativ zum hinteren Dachteil (3) translatorisch nach vorne in Richtung der Windschutzscheibe verschiebbar ist.

3. Cabriolet-Fahrzeugdach nach Anspruch 1 oder 2,
**dadurch gekennzeichnet, dass** die Gelenkkinematik (4) einen translatorisch verschiebbaren Schieber (10) zwischen vorderem und hinterem Dachteil (2 bzw. 3) umfasst.

4. Cabriolet-Fahrzeugdach nach Anspruch 3,
**dadurch gekennzeichnet, dass** in den Schieber (10) eine Kulisse zur translatorischen Führung des Schiebers (10) eingebracht ist.

5. Cabriolet-Fahrzeugdach nach Anspruch 3 oder 4,
**dadurch gekennzeichnet, dass** ein die Schwenkachse definierender, gelenkig gelagerter Verbindungslenker (11) an dem Schieber (10) angreift, wobei der Schieber (10) und der Verbindungslenker (11) an unterschiedlichen Dachteilen (2 und 3) befestigt sind.

6. Cabriolet-Fahrzeugdach nach Anspruch 5,
**dadurch gekennzeichnet, dass** der Schieber (10) am hinteren Dachteil (3) und der Verbindungslenker (11) am vorderen Dachteil (2) gehalten ist.

7. Cabriolet-Fahrzeugdach nach Anspruch 5 oder 6,
**dadurch gekennzeichnet, dass** der Schieber (10) über ein Gelenk (19) mit dem Verbindungslenker (11) verbunden ist.

8. Cabriolet-Fahrzeugdach nach einem der Ansprüche 3 bis 7,
**dadurch gekennzeichnet, dass** an dem Schieber (10) ein gelenkig gehaltener Stabilisierungslenker (12) befestigt ist, dessen dem Schieber (10) abgewandtes Ende gelenkig mit demjenigen Dachteil (2) verbunden ist, welches dem Schieber (10) gegenüber liegt.

9. Cabriolet-Fahrzeugdach nach einem der Ansprüche 1 bis 8,
**dadurch gekennzeichnet, dass** eine schwenkbar gelagerte, von einem Aktuator (6) beaufschlagte Wippe (7) vorgesehen ist, an der zwei Übertragungslenker (8 und 9) angreifen, von denen ein erster Übertragungslenker (8) die translatorische Relativbewegung und ein zweiter Übertragungslenker (9) die rotatorische Relativbewegung zwischen den Dachteilen (2 und 3) erzeugt.

10. Cabriolet-Fahrzeugdach nach Anspruch 9,
**dadurch gekennzeichnet, dass** der erste Übertragungslenker (8) an dem Schieber (10) angreift.

11. Cabriolet-Fahrzeugdach nach Anspruch 9,
**dadurch gekennzeichnet, dass** der zweite Übertragungslenker (9) an dem Verbindungslenker (11) angreift.
